# EUROPÄISCHE PATENTSCHRIFT

(11) **EP 2 913 877 B1**
(45) Veröffentlichungstag und Bekanntmachung des Hinweises auf die Patenterteilung: **31.01.2018**
(21) Anmeldenummer: 15000036.2
(22) Anmeldetag: 10.01.2015
(51) Int. Cl.: H01M 8/10, H01M 8/24

(54) **Direkt-Alkohol-Brennstoffzelle und Direkt-Alkohol-Brennstoffzellenstapel mit effektiver CO2-Entfernung sowie Verfahren zum Betreiben einer solchen Direkt-Alkohol-Brennstoffzelle**
Direct alcohol fuel cell and direct alcohol fuel cell stack with efficient CO2 removal and method for operating such a direct alcohol fuel cell
Pile à combustible à méthanol direct et empilement de piles à combustible à méthanol direct avec élimination efficace du CO2 et procédé d'utilisation d'une telle pile à combustible à méthanol direct

(30) Priorität: 08.02.2014 DE 102014001731
(43) Veröffentlichungstag der Anmeldung: 02.09.2015
(73) Patentinhaber: Forschungszentrum Jülich GmbH, 52425 Jülich (DE)
(72) Erfinder: Kulikovsky, Andrei, Vihula Vald, Laane Virumaa 45411 Estonia (EE)

(56) Entgegenhaltungen:
- JP-A- 2010 182 496
- US-A1- 2005 170 224
- US-A1- 2008 241 618
- US-A1- 2009 246 565
- A.A. KULIKOVSKY: "Model of the flow with bubbles in the anode channel and performance of a direct methanol fuel cell", ELECTROCHEMISTRY COMMUNICATIONS, Bd. 7, Nr. 2, Februar 2005 (2005-02), Seiten 237-243, XP002740335,

## Beschreibung

Die Erfindung betrifft eine Brennstoffzelle, insbesondere eine Direkt-Methanol-Brennstoffzelle oder eine Direkt-Ethanol-Brennstoffzelle. Die Erfindung betrifft ferner ein Verfahren zum Betreiben der vorgenannten Direkt-Alkohol-Brennstoffzelle.

### Stand der Technik

Als eines der größten Probleme bei der Direkt-Methanol-Brennstoffzellen (DMFC) - Technologie hat sich neben der schlechten Kinetik der Methanoloxidation und des Methanol Cross-Overs durch die Membran zudem die Bildung von gasförmigem CO₂ an der Anode der Brennstoffzelle herausgestellt. Bei einer Direkt-Methanol-Brennstoffzelle wird flüssiges Methanol bzw. eine Methanol-Wassermischung als Brennstoff zur anodischen Katalysatorschicht geführt und dort oxidiert. Als Produkt der Methanol-Oxidationsreaktion (engl.: methanol oxidation reaction = MOR) entsteht CO₂, welches nun seinerseits wieder zurück in die Anodenkanäle permeiert und dort auf Grund der geringen Löslichkeit in Form von gasförmigen CO₂-Blasen regelmäßig zu einer Störung des Durchflusses des Methanols, bzw. der Methanol-Wassermischung führt. Insbesondere bei mäanderförmigen und langen Methanolzuführungskanälen sinkt die Methanol-Konzentration auf Grund der ständig neu gebildeten CO₂-Blasen zum Kanalende hin erheblich ab. Dies konnte auch in praktischen Untersuchungen von H. Yang, T.S. Zhao und Q.Ye in "Pressure drop behavior in the anode flow field of liquid feed direct methanol fuel cells", Journal of Power Sources, Volume 142, Issues 1-2, 24 March 2005, Pages 117-124, belegt werden. Es hat sich gezeigt, dass der Druckabfall über die Anode bei einer senkrecht angeordneten, serpentinenartigen Kanalstruktur zunächst bei insgesamt geringen Stromdichten mit steigender Stromdichte ansteigt, um anschließend bei höheren Stromdichten wieder deutlich abzufallen. Gleichzeitig steigt der Druckabfall mit steigender Durchflussrate der eingesetzten Methanol-Wassermischung. Es konnte zudem gezeigt werden, dass die Betriebstemperatur der Zelle und die eingesetzte Methanol-Konzentration einen deutlichen Einfluss auf die Zellleistung, nicht jedoch auf den Druckabfall haben.

Bereits bei moderaten Stromstärken steigt die Geschwindigkeit des Anodendurchflusses am Anodenauslass auf Grund der gebildeten CO₂-Blasen drastisch, das heißt in der Regel um mehr als eine Größenordnung, an. Dieser Anstieg in der Strömungsgeschwindigkeit wird begleitet von einer starken Verringerung der Methanol-Konzentration nahe am Anodenauslass. Dies führt wiederum zu einem Anstieg in der anodischen Überspannung, welche einerseits das Zellpotential reduziert aber andererseits nachteilig die Korrosionsrate von Kohlenstoff und Ruthenium in der anodischen Katalysatorschicht erhöht.

Die experimentellen Daten wurden von A.A. Kulikovsky in "Model of the flow with bubbles in the anode channel and performance of a direct methanol fuel cell", Electrochemistry Communications, Volume 7, Issue 2, February 2005, Pages 237-243, durch ein Modell verifiziert. Danach führen die Entstehung und das Anwachsen der gasförmigen CO₂-Blasen entlang des Anodenkanals einerseits zu einer Erhöhung der Durchflussrate und andererseits zu einer deutlichen Verringerung der zeitlich gemittelten lokalen Methanol-Konzentration, wobei der zweite Effekt die begrenzende Stromdichte der Brennstoffzelle deutlich herabsenkt.

Um eine Direkt-Methanol-Brennstoffzelle in einem optimalen Bereich zu betreiben, ist daher neben der Temperatur und der Methanol-Konzentration insbesondere eine Optimierung des Flowfields auf der Anodenseite anzustreben, um das Ausmaß an gebildeten CO₂-Blasen innerhalb des zugeführten Brennstoffs zu reduzieren.

In der Regel kann eine Homogenisierung der Methanol-Konzentration entlang der anodischen Durchflusskanäle beispielsweise durch eine Erhöhung des anodischen Durchflusses erzielt werden. Dadurch wird regelmäßig viel mehr Brennstoff zugeführt, als es nach der Stöchiometrie zur elektrochemischen Umsetzung notwendig wäre. Bei dieser Methode wird jedoch nicht das vorab angesprochene Problem gelöst. Im Gegenteil, durch die erhöhte Zufuhr von Brennstoff wird regelmäßig sogar nachteilig eine höhere Pumpleistung benötigt, um die anodische Methanol-Wassermischung durch die Brennstoffzelle zu pumpen.

Aus US 2005/170224 A1 ist eine Direkt-Methanol-Brennstoffzelle bekannt, bei der auf der Anodenseite ein Kanal in direktem Kontakt mit der Anode vorhanden ist, über den gleichzeitig die Zuführung von gasförmigem Methanol aus einem Methanolreservoir zur Elektrolytmembran als auch die Abführung von gasförmigen CO₂ von der Elektrolytmembran erfolgt. In dem Bereich, in dem die Zuführung des Methanols über den Kanal und ggfs. über eine poröse anodische Diffusionsschicht zur Elektrolytmembran erfolgt, weist diese einen Katalysator, insbesondere einen Katalysator für eine anodische Oxidation wie beispielsweise PT/RU, auf.

Die US 2009/0246565 A1 beschreibt ein Brennstoffzellensystem, bei dem poröse Brennstoffkanäle an eine Anode und poröse Luftkanäle an eine Kathode grenzen. Sowohl die Anode als auch die Kathode sind flächig über jeweils einen Elektrodenkatalysator mit der Elektrolytmembran verbunden.

Ähnliche Aufbauten für eine Brennstoffzelle sind auch aus US 2008/241618 A1 und JP 2010 182496 A bekannt.

### Aufgabe und Lösung der Erfindung

Aufgabe der Erfindung ist es, eine neue Direkt-Alkohol-Brennstoffzelle, insbesondere eine Direkt-Methanol- oder eine Direkt-Ethanol-Brennstoffzelle oder einen Brennstoffzellenstapel umfassend derartige Einzelzellen bereitzustellen, die das Problem des sich an der Anode bildenden gasförmigen CO₂, welches sich regelmäßig in den den Brennstoff führenden Anodenkanälen ausbildet, löst, ohne dass dazu der Durchfluss der zugeführten anodischen Methanol- bzw. Ethanol-Wassermischung nachteilig gestört wird.

Die Aufgabe der Erfindung wird gelöst durch eine Direkt-Alkohol-Brennstoffzelle gemäß Hauptanspruch, sowie durch einen Direkt-Alkohol-Brennstoffzellenstapel gemäß Nebenanspruch. Vorteilhafte Ausgestaltungen der Brennstoffzelle bzw. des Brennstoffzellenstapels finden sich in den jeweils darauf rückbezogenen Ansprüchen wieder. Ferner wird die Aufgabe der Erfindung gelöst durch ein Verfahren zum Betreiben einer Brennstoffzelle gemäß weiterem Nebenanspruch.

### Gegenstand der Erfindung

Gegenstand der Erfindung ist eine neuartige Direkt-Alkohol-Brennstoffzelle, die einerseits das Problem der gasförmigen CO₂-Entstehung und Ableitung an der Anode löst, ohne dabei den Durchfluss der Brennstoff-Wassermischung in den Zuführungskanälen (Kanalstrukturen) zu stören. Die dieser Erfindung zu Grunde liegende Idee basiert auf der Vorstellung, die Ströme der zugeführten Brennstoff-Wassermischung und des entstehenden CO2s, ggfs. zusammen mit Wasser, lokal voneinander zu trennen. Dazu soll der Brennstoff, d. h. beispielsweise eine Methanol-Wassermischung oder eine Ethanol-Wassermischung, zwar über eine Zuführungsleitung bis zur Membran geleitet werden, die eigentliche Umsetzung des Brennstoffs, bei der dann das CO₂ gebildet wird, soll aber an anderer Stelle erfolgen. Insbesondere soll der Brennstoff nicht direkt sondern zunächst über die Membran der Stelle zugeführt werden, an der die anodische Oxidation stattfindet.

Dazu weist die erfindungsgemäße Direkt-Alkohol-Brennstoffzelle eine Anode, einer Kathode sowie einer dazwischen angeordnete Ionen leitenden Membran auf, die in Form einer Elektroden-Elektrolyteinheit (engl. membrane electrode assembly = MEA) vorliegen.

Die Anode und die Kathode umfassen in der Regel Graphit oder ein Metall und übernehmen die Funktion der Stromsammler.

Darüber hinaus weist die erfindungsgemäße Direkt-Alkohol-Brennstoffzelle neben wenigstens einem Kanal für ein Oxidationsmittel (engl. oxidant channel = OC) auf der Kathodenseite zusätzlich wenigstens einem Kanal für einen Brennstoff (engl. fuel channel = FC) (z. B. eine Methanol-Wassermischung) auf, der auf der Anodenseite oder auf der Kathodenseite vorgesehen ist.

Ferner sieht die erfindungsgemäße Direkt-Alkohol-Brennstoffzelle wenigstens einen weiteren Kanal vor, der speziell zur Ableitung des gebildeten gasförmigen CO₂ (engl. CO₂-removal channel = CRC), gegebenenfalls auch zusammen mit Wasser, auf der Anodenseite angeordnet ist.

Im Rahmen der Erfindung wird hier unter einem Kanal eine Zuführungs-, eine Abführungs- bzw. eine Durchgangsleitung innerhalb einer Elektrode verstanden, die benachbart zur Membran angeordnet ist, und durch die die flüssigen Betriebsmittel einer Direkt-Alkohol-Brennstoffzelle geleitet, bzw. das entstandene gasförmige CO₂ abgeleitet werden können. Insbesondere bei einer anodischen oder kathodischen Kreislaufführung sind die Leitungen für ein Oxidationsmittel, bzw. für einen Brennstoff somit eher als Durchgangsleitungen aufzufassen.

Im Rahmen der Erfindung ist unter dem Begriff Kanal insbesondere eine Kanalstruktur (Aussparung, Nut) zu verstehen, die einseitig offen in einer Schicht, beispielsweise einer Elektrode, vorhanden ist, und die zusammen mit einer daran angrenzenden weiteren Schicht, beispielsweise einer Katalysatorschicht, einer backing layer oder der Ionen leitenden Membran, eine geschlossene Leitung zur Zu- oder Abführung eines Betriebsmittels oder eines Reaktionsproduktes ausbildet.

In einer Ausgestaltung der Erfindung können jeweils an den äußeren Seiten der Membran-Elektrodeneinheiten zusätzlich noch weitere Schichten wie beispielsweise ein Strömungsfeld (flowfiled), eine Gasdiffusionsschicht oder eine Bipolarplatte angeordnet sein. Die Membran-Elektrodeneinheit weist typischerweise eine Dicke im Bereich von ca. 200 µm auf.

Die Membran selbst umfasst in der Regel ein Polymer (engl. polymer electrolyte membrane = PEM), ist Ionen leitend, insbesondere Protonen leitend, und blockiert den Transport von Elektronen. Als geeignete Ionen leitende Membran können alle bislang für die Direkt-Alkohol-Brennstoffzelle üblichen Elektrolyte eingesetzt werden.

Der Bereich der Elektroden-Elektrolyteinheit (MEA), der an einen Kanal für ein Oxidationsmittel (OC) angrenzt, umfasst einen Katalysator zur Umsetzung des Oxidationsmittels und bildet die sogenannte kathodische Katalysatorschicht (engl. cathode catalyst layer = ccl). Als dafür geeignete Katalysatoren können alle bislang für die kathodische Sauerstoffreduktion in einer Direkt-Alkohol-Brennstoffzelle üblichen Katalysatoren eingesetzt werden, beispielsweise ein Pt-Katalysator. Der Bereich der Elektroden-Elektrolyteinheit (MEA), der direkt oder über eine backing layer an den Kanal für die Ableitung des gebildeten CO₂ (CRC) angrenzt, umfasst einen Katalysator zur Umsetzung des Brennstoffs und bildet die sogenannte anodische Katalysatorschicht (engl. anode catalyst layer = acl). Als dafür geeignete Katalysatoren können alle bislang für die anodische Oxidation in einer Direkt-Alkohol-Brennstoffzelle üblichen Katalysatoren eingesetzt werden, beispielsweise ein Pt-Ru-Katalysator. Die Flächen der Bereiche der Katalysatorschichten sind dabei erfindungsgemäß wenigstens so groß, dass sie die Kanäle zur Elektroden-Elektrolyteinheit (MEA) hin jeweils vollständig abdecken. Darüber hinaus können die Flächen aber auch größer gewählt werden.

In einer Ausgestaltung der Erfindung wird bei der Herstellung der Brennstoffzelle der anodische oder kathodische Katalysator direkt auf eine Seite der Membran aufgebracht, so dass er sich nahezu vollständig auf der Oberfläche der Membran befindet.

In einer weiteren Ausgestaltung der Erfindung kann der entsprechende anodische oder kathodische Katalysator bei der Herstellung der Brennstoffzelle zunächst auf einem sehr dünnen porösen Kohlenstoffpapier oder einem Kohlenstoffgewebe (backing layer) aufgebracht, und dieses im Anschluss zwischen Membran und der jeweiligen Elektrode verpresst werden.

Der Bereich der Elektroden-Elektrolyteinheit (MEA), der direkt oder über eine backing layer an einen Kanal für den Brennstoff (FC) angrenzt, weist demgegenüber erfindungsgemäß keinen Katalysator auf.

Die erfindungsgemäße Direkt-Alkohol-Brennstoffzelle weist gegenüber den bislang bekannten Brennstoffzellen mindestens einen zusätzlichen Kanal (CrC) auf der Anodenseite auf, der eigens für die Abführung des durch die anodische Oxidation des Alkohols gebildeten CO₂ vorgesehen ist. Davon lokal getrennt findet die Zuführung des Alkohols als Brennstoff, insbesondere in Form einer flüssigen Methanol- oder Ethanol-Wassermischung, durch die Kanäle für den Brennstoff (FC) statt. Dabei sind Ausgestaltungen der Direkt-Alkohol-Brennstoffzelle möglich, bei denen der oder die Kanäle zur Zuführung des Brennstoffs (FC) entweder auf der Anodenseite oder auf der Kathodenseite angeordnet sind.

Die erfindungsgemäße Brennstoffzelle ist für den Einsatz von kurzkettigen Alkoholen, insbesondere für den Einsatz von Methanol oder Ethanol als Brennstoff geeignet.

Es hat sich herausgestellt, dass unter der Voraussetzung, dass zwischen dem Kanal zur Zuführung des Brennstoffs und dem Kanal zur Zuführung des Oxidationsmittels, sofern sie beide auf der Kathodenseite angeordnet sind, ein ausreichend großer Abstand gegeben ist, der Stofftransport des Alkohols vom Brennstoffkanal durch die Membran zur Kathode, bzw. zu der Kathodenkatalysatorschicht im Unterschied zum Transport des Alkohols zur Anodenkatalysatorschicht regelmäßig sehr gering ausfällt. Unter einem ausreichend großen Abstand im Sinne der Erfindung wird ein Abstand von wenigstens 1 mm verstanden.

Die Kanäle zur Zuführung des Brennstoffs sind dabei auf der Oberfläche der Elektroden einzeln und klar abgetrennt von den Kanälen zur Zuführung des Oxidationsmittels angeordnet.

Für eine Ausgestaltung der erfindungsgemäßen Brennstoffzelle, bei der dieser Abstand unterschritten wird und in der Größenordnung der Membranschichtdicke liegt, sieht eine vorteilhafte Ausgestaltung der Erfindung vor, dass innerhalb der zwischen der Anode und der Kathode angeordneten Membran wenigstens eine zusätzliche Trennvorrichtung angeordnet ist und zwar derart, dass sie von einer anodischen Katalysatorschicht bis zur Gegenelektrode, d. h. der Kathode reicht. Ferner ist diese Trennvorrichtung derart angeordnet, dass ein Membranbereich, der an einen Kanal für einen Brennstoffs (FC) grenzt, von einem Membranbereich, der an einen Kanal für ein Oxidationsmittel (OC) grenzt, abtrennt ist. Diese Trennvorrichtung verhindert somit regelmäßig, dass der Alkohl aus einem Kanal für einen Brennstoff durch die Membran direkt zur kathodischen Katalysatorschicht permeieren kann.

Als Material für diese Trennvorrichtung kann jedes Material verwendet werden, welches nicht Elektronen leitend und nicht Ionen leitend ausgestaltet ist. Es sollte zudem keine chemischen Reaktionen mit dem Membranmaterial, mit dem Alkohol oder den Katalysatorschichten eingehen und bei Temperaturen stabil sein, bei denen die Direkt-Alkohol-Brennstoffzelle (DMFC) typischerweise betrieben wird, also beispielsweise bis ca. 200 °C.

Als geeignetes Material für diese Trennvorrichtung könnte beispielsweise ein Kunststoff, insbesondere Teflon, eingesetzt werden.

Die Trennvorrichtung ist vorteilhaft senkrecht zu der Zellebene angeordnet.

Für die Ausgestaltung der Erfindung, bei der der Kanal zur Zuführung des Brennstoffs und der Kanal zur Zuführung des Oxidationsmittels jeweils auf unterschiedlichen Elektroden angeordnet sind, spielt der Abstand zwischen den Kanälen demgegenüber keine Rolle. Eine Trennvorrichtung ist insofern nicht zwingend notwendig.

Das erfindungsgemäße Verfahren zum Betreiben einer erfindungsgemäßen Direkt-Alkohol-Brennstoffzelle sieht vor, dass der Brennstoffzelle sowohl Brennstoff als auch ein Oxidationsmittel, bevorzugt Luft, über jeweils wenigstens einen Kanal zugeführt wird, und das gebildete CO₂, über eine separate, von dem Kanal für den Brennstoff getrennten Kanal, gegebenenfalls zusammen mit Wasser, abgezogen werden kann.

Dabei kann der Kanal zur Abführung des anodenseitig gebildeten CO₂ in einer weiteren Ausführungsform vorteilhaft zusätzlich mit einem gasförmigen oder flüssigen Medium, beispielsweise Wasser, zur Unterstützung des Abtransportes des CO₂ auch aktiv gespült werden.

### Spezieller Beschreibungsteil

Nachfolgend wird die Erfindung anhand einiger Figuren näher erläutert. Obwohl die erfindungsgemäße Brennstoffzelle eine Direkt-Alkohol-Brennstoffzelle ist, wird im Folgenden der Einfachheit halber eine Direkt-Methanol-Brennstoffzelle (DMFC) als besondere Ausführungsform der Erfindung näher beschrieben, ohne dass dadurch eine Einschränkung der Erfindung erfolgt.

Alle Ausgestaltungen und Wirkungsweisen gelten in gleicher Weise auch für Brennstoffzellen, die mit allen übrigen kurzkettigen Alkoholen, insbesondere auch mit Ethanol als Brennstoff betrieben werden können. In der Figuren bedeuten jeweils:
- 1: Anode
- 2: Kathode
- 3: Elektrolyt (Polymerelektrolyt)
- 4: Trennvorrichtung (optional)
- 5: Schicht ohne Katalysator
- 6: Trägerschicht (backing layer)
- acl: anodische Katalysatorschicht (anode catalyst layer)
- ccl: kathodische Katalysatorschicht (cathode catalyst layer)
- R: Widerstand, Last, Verbraucher
- FC: Kanal für eine Brennstoff, insbesondere Ethanol oder Methanol, (fuel channel)
- OC: Kanal für ein Oxidationsmittel, insbesondere Luft oder O₂, (oxidant channel)
- CrC: Kanal zur Abführung des gebildeten CO₂, ggfs. zusammen mit Wasser, (CO₂ removal channel)

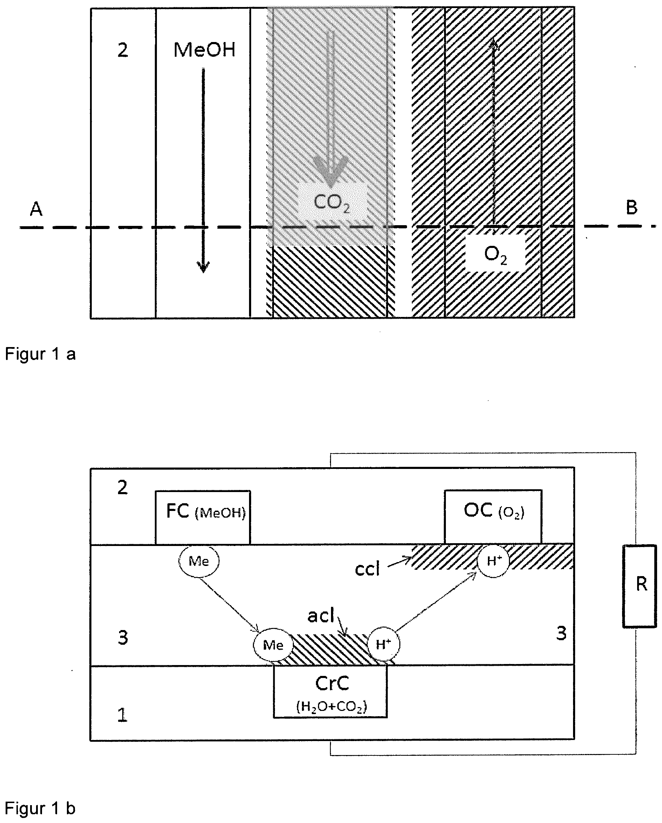

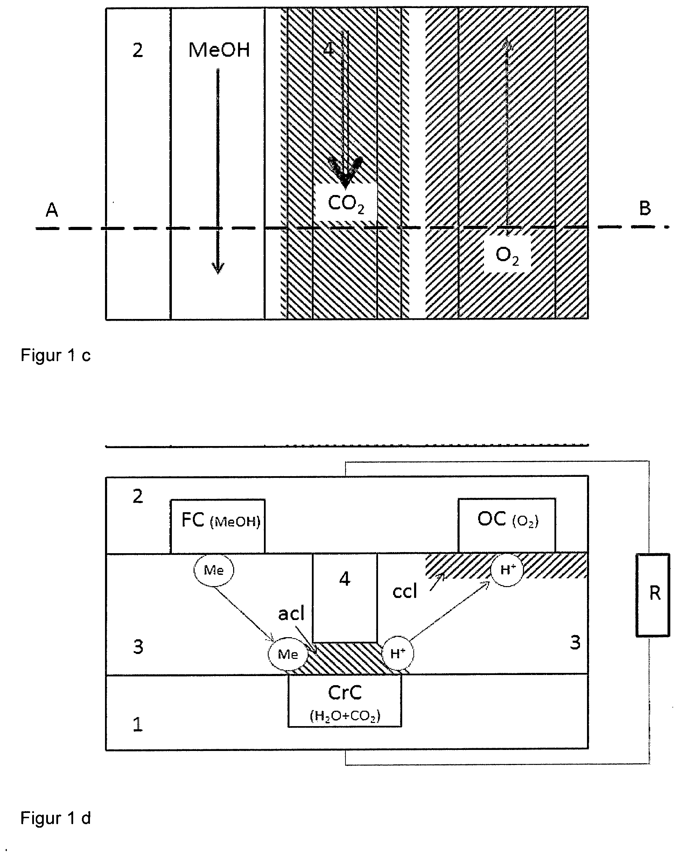

In einer vorteilhaften Ausgestaltung der Erfindung, ist der Kanal zur Zuführung des Brennstoffs (FC) auf der Kathodenseite 3 angeordnet. Die Figuren 1b und 1d zeigen eine solche Ausgestaltung schematisch im Querschnitt und die Figuren 1a und 1c jeweils eine solche Ausgestaltung von oben betrachtet.
Zwischen der Anode 1 und der Kathode 2 ist die Ionen leitende Membran 3 angeordnet. Innerhalb der Kathode 2 und an die Membran 3 angrenzend sind zwei unterschiedliche Kanäle eingezeichnet, die einerseits einen Zuführungskanal für ein Oxidationsmittels (OC), beispielsweise Luft, und andererseits einen Zuführungskanal für ein Brennstoff (FC), beispielsweise eine Methanol-Wassermischung, darstellen. Ferner weist die Anode 1 ebenfalls einen an die Membran angrenzenden Abführungskanal (CrC) auf, der für die Ableitung des CO₂ vorgesehen ist.

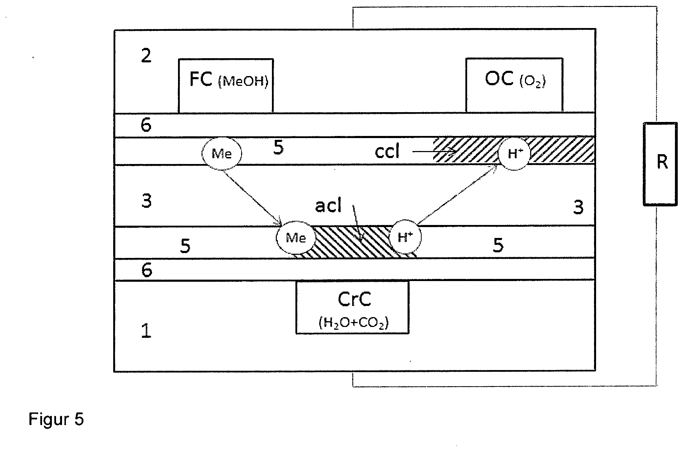

Eine Variante dieser Ausgestaltung mit jeweils einer backing layer 6 zwischen den Elektroden 1, 2 und der an die Membran 3 angrenzende Katalysatorschicht (ccl oder acl) bzw. einen keinen Katalysator aufweisenden Schicht (5) ist in Figur 5 dargestellt.

Wie aus den Figuren 1b und 1d ersichtlich wird, ist der Kanal zur Zuführung, bzw. Durchleitung der Methanol-Wassermischung (FC) und die Anode (1) auf entgegengesetzten Seiten der Membran (3) angeordnet.

Bei dieser Ausführungsform werden sowohl das Oxidationsmittel als auch der Brennstoff von der Kathodenseite her der Direkt-Methanol-Brennstoffzelle zugeführt.

Während in Figur 1b eine Ausgestaltung der erfindungsgemäßen Brennstoffzelle dargestellt ist, bei der der Kanal zur Zuführung des Brennstoffs (FC) und dem Kanal zur Zuführung des Oxidationsmittels (OC) ein ausreichend großer Abstand aufweisen, ist in Figur 1d eine weitere Ausgestaltung der erfindungsgemäßen Brennstoffzelle dargestellt, die zusätzlich eine Trennvorrichtung 4 aufweist. Die Trennvorrichtung 4 verläuft zwischen den beiden Kanälen zur Zuführung des Brennstoffs (FC) und des Oxidationsmittels (OC) und trennt dies voneinander ab. Während in dem Bereich der Membran, der an den Kanal zur Zuführung des Brennstoffs angrenzt, der Brennstoff ungehindert durch die Membran zur anodischen Katalysatorschicht permeiert und dort oxidiert wird, wandern in dem Bereich der Membran, der an den Kanal zur Zuführung des Oxidationsmittels angrenzt, die bei der Alkoholoxidation erzeugten Protonen zur kathodischen Katalysatorschicht und werden dort zu Wasser reduziert.

Während des Betriebs der Brennstoffzelle wird das Methanol, bzw. die Methanol-Wassermischung durch den Kanal für den Brennstoff (FC) auf der Kathodenseite (3) der Brennstoffzelle zur Verfügung gestellt.

Das zugeführte Methanol diffundiert durch die Polymer-Elektrolytmembran (3), in der Regel Nafion®, zur Katalysatorschicht auf der Anodenseite (acl). Hier wird das Methanol durch die Methanol-Oxidationsreaktion in Protonen und Elektronen umgewandelt. Der Methanol *Cross-Over* durch die Membran (3) ist dabei regelmäßig groß genug, um ausreichend Methanol zur Anode 1, bzw. zur anodischen Katalysatorschicht (acl) zu transportieren. Eine Transportlimitierung ist somit während des Betriebs der Brennstoffzelle regelmäßig ausgeschlossen. Zudem kann die Membran 3 entsprechend dünn ausgestaltet werden, um doch noch eventuell auftretende Behinderungen durch den Methanol *Cross*-*Over* abzufangen.

Um die anodische Oxidation des Methanols zu unterstützen, kann vorteilhaft die Schichtdicke der anodischen Katalysatorschicht (acl) gegenüber herkömmlichen Schichtdicken leicht erhöht werden. In der Regel betragen die Schichtdicken von herkömmlichen Katalysatorschichten ca. 100 µm. Da bei der vorliegenden Erfindung der Methanolzugang zur anodischen Katalysatorschicht (acl) - anders als sonst üblich - nicht über die gesamte Fläche des benachbart angeordneten Zuführungskanals, sondern erfindungsgemäß zunächst durch die Membran und dann insbesondere über eine Seite der Katalysatorschicht erfolgt, kann der Zugang des Methanols vorteilhaft dadurch verbessert werden, wenn entweder die Fläche des Bereichs der anodischen Katalysatorschicht (acl) insgesamt und/oder die Schichtdicke dieser Schicht selbst vergrößert werden.

Für die Ausgestaltungen der erfindungsgemäßen Brennstoffzelle ohne eine zusätzliche Trennvorrichtung liegen die geeigneten Schichtdicken der anodischen Katalysatorschicht im üblichen Bereich, d. h. zwischen 10 und 100 µm.

Für die Ausgestaltungen der erfindungsgemäßen Brennstoffzellen, bei denen wenigstens eine zusätzlich Trennvorrichtung vorgesehen ist, liegen die geeigneten Schichtdicken der anodischen Katalysatorschicht etwas höher, also im Bereich zwischen 50 und 300 µm, vorteilhaft im Bereich um 200 µm.

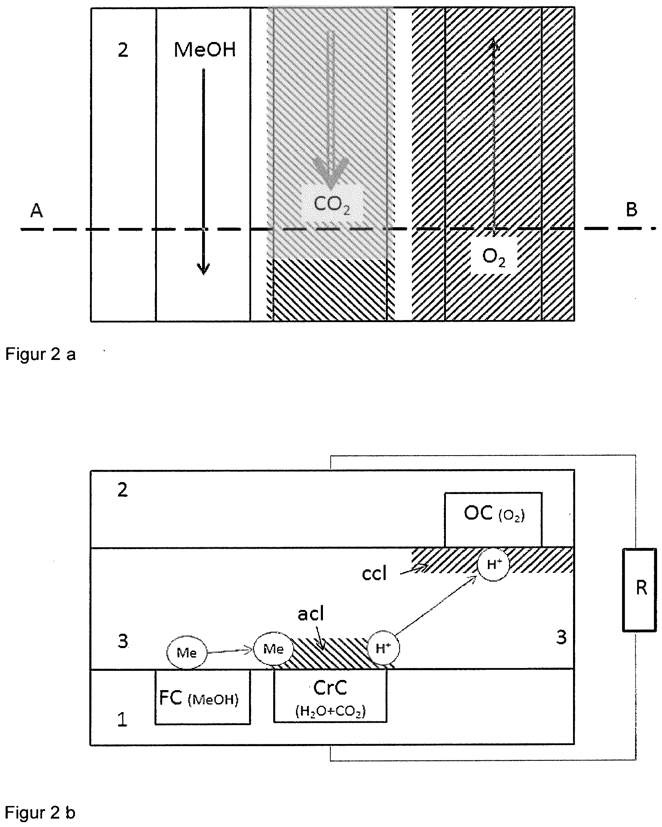

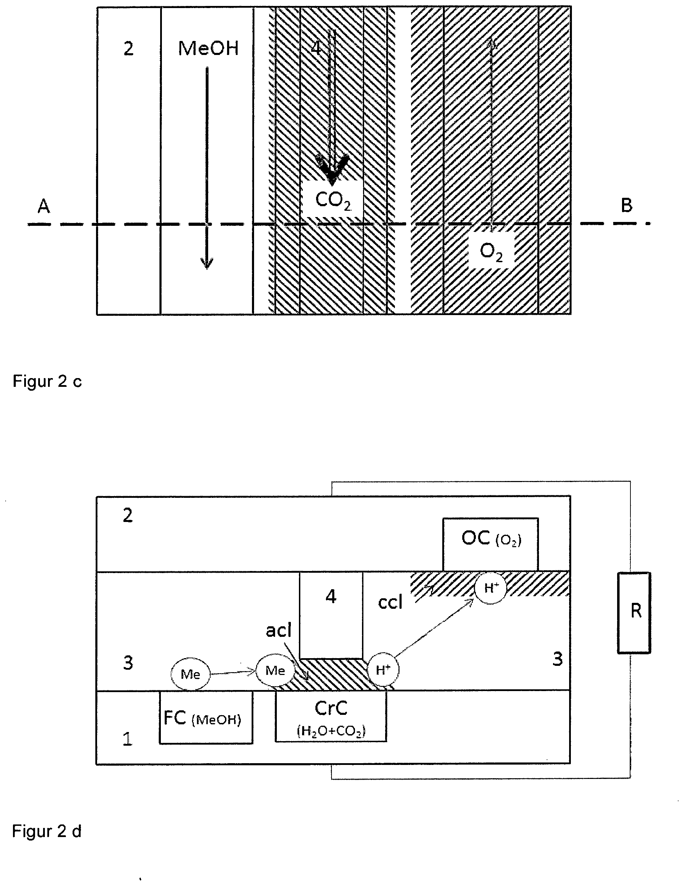

Die bei der Oxidation des Methanols auf der Anodenseite entstehenden Protonen wandern durch die Membran (3) zur Kathodenseite 2, und zwar bevorzugt dorthin, wo ein kathodischer Katalysator die kathodischen Sauerstoff Reduktionsreaktion unterstützen kann, d. h. zur kathodischen Katalysatorschicht (ccl), die an den Kanal für ein Oxidationsmittel (OC) angrenzt. Die kathodische Katalysatorschicht (ccl) kann vorteilhaft bis an die Trennvorrichtung 4 heranreichen, jedoch ist dies nicht zwingend erforderlich.
Die Figur 1a und 1 c zeigen die Ausführungsformen gemäß der Figuren 1b und 1d jeweils von oben betrachtet. Die Katalysatorschichten sind jeweils schraffiert dargestellt. Die Schnittebene A-B in den Figuren 1 a und 1c würde dann beispielsweise zu Querschnitten gemäß der Figuren 1b und 1d führen.
In einer weiteren Ausführungsform der Erfindung weist die DMFC den Kanal zur Zuführung des Brennstoffs (FC) anders als im ersten Ausführungsbeispiel nunmehr auf der Anodenseite auf. Diese Ausgestaltung ist schematisch in den Querschnitten gemäß der Figuren 2b und 2d dargestellt. Der Unterschied zwischen den Figuren 2b (2a) und 2d (2c) ist in der optionalen Trenneinheit 4 zu sehen, analog zu den Ausführungen gemäß der Figuren 1a bis 1 d. Auch in diesem Fall kann das auf der Anodenseite zugeführte Methanol auf Grund des Methanol *Cross-Overs* direkt durch die Membran zur benachbarten anodischen Katalysatorschicht (acl) wandern, wo es dann oxidiert wird, und das dabei entstehende CO₂ durch den benachbart zur Katalysatorschicht angeordneten Kanal zur CO₂-Abführung aus der Brennstoffzelle geleitet werden.
Die Anordnung des Kanals zur Zuführung des Brennstoffs (FC) erfolgt auf der Anodenseite in einer besonderen Ausführungsform derart, dass in diesem Fall der Membranbereich, der an den Kanal für einen Brennstoff (FC) grenzt, von dem Membranbereich, der an einen Kanal für ein Oxidationsmittel (OC) grenzt, durch eine Trennvorrichtung 4 abtrennt ist. (Figuren 2c, 2d). Diese Trennvorrichtung verhindert regelmäßig, dass Methanol aus dem Kanal für einen Brennstoff durch die Membran direkt zur kathodischen Katalysatorschicht permeieren kann.
Von oben betrachtet würden sich auch diese Querschnitte gemäß der Figuren 2b und 2d so darstellen, wie in den Figuren 2a und 2b wiedergegeben.

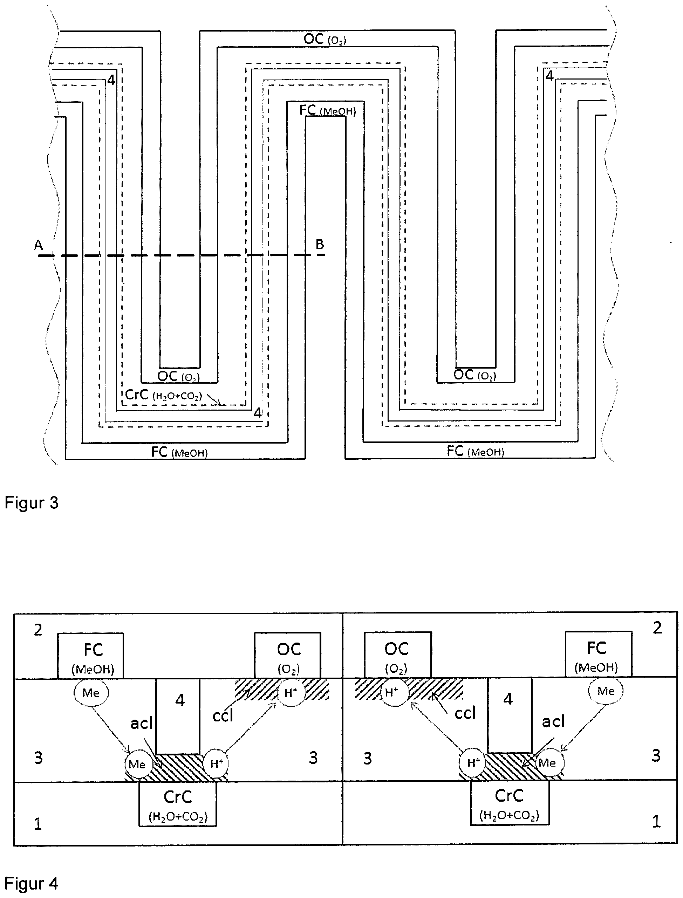

In einer weiteren besonderen Ausgestaltung der Erfindung sind die Zu-und Abführungskanäle für den Brennstoff (FC) bzw. das Oxidationsmittel (OC) beispielsweise nicht linear sondern in Form eines Mäanders über die Membran 3 angeordnet (siehe Figur 3). In diesem Fall muss bei einer optional vorhandenen Trennvorrichtung 4 sichergestellt werden, dass der Membranbereich, der an den Brennstoffkanal grenzt und der Membranbereich, der an den Oxidationsmittelkanal grenzt, keinen direkten Kontakt zueinander aufweisen, sondern nur über die Trennvorrichtung 4 und eine anodische Katalysatorschicht (acl) benachbart angeordnet sind. Zudem wird dadurch auch die Form des CO₂ abführenden Kanals (CrC) festgelegt, da dieser über die anodische Katalysatorschicht (acl) im Verlauf an die der Trennvorrichtung 4 angepasst ist. Eine mögliche Ausgestaltung ist in Figur 3 zu sehen. Der CO₂ abführende Kanal (CrC) ist hier gestrichelt dargestellt. Zur besseren Übersichtlichkeit wurden die an die Kanäle angrenzenden Katalysatorschichten (acl und ccl) hier nicht dargestellt, ebenso wie die Verschaltung als Brennstoffzelle.

In der Figur 4 ist wieder ein schematischer Querschnitt durch einen Teil einer erfindungsgemäßen Direkt-Methanol-Brennstoffzelle gemäß dem Schnitt A-B aus Figur 3 dargestellt. In dieser Ausgestaltung erstreckt sich beispielsweise die kathodische Katalysatorschicht (ccl) über den kompletten Bereich zwischen den jeweiligen Trennvorrichtungen 4. Dies ist jedoch nur eine besondere Ausführung und nicht zwingend notwendig. Wichtig ist nur, dass die an die Oxidationsmittel führenden Kanäle (OC) angrenzenden Bereiche der Membran 3 vollständig von der Katalysatorschicht (ccl) abgedeckt werden.

Mehrere der erfindungsgemäßen Brennstoffzellen können - wie bei bisher bekannten Brennstoffzellen üblich - zu einem Brennstoffzellenstapel zusammengefügt werden. 5).

Die Kernidee der vorliegenden Erfindung ist einerseits ein Zuführungskanal für einen Brennstoff, der in dem Bereich der Membran keinen Katalysator aufweist, und somit lediglich einen Transport des Alkohols in die Membran zulässt, und andererseits ein zusätzlicher, weiterer Kanal auf der Anodenseite der Brennstoffzelle, der benachbart zu einem anodischen Katalysator angeordnet ist, durch den ausschließlich das durch die anodische Oxidation des Alkohols an der Anode gebildete, gasförmige CO₂ vorteilhaft abgeführt werden kann.

Um zu verhindern, dass in diesem Kanal neben dem CO₂ auch nachteilig Sauerstoff eindringt, kann der Kanal vorteilhaft mit Wasser oder einem Inertgas angefüllt bzw. gespült werden. Während des Betriebs der Brennstoffzelle würde das an der Anode erzeugte Kohlendioxid CO₂-Gasblasen ausbilden, die den Kanal verlassen, und damit vorteilhaft verhindern, dass umgekehrt Sauerstoff in den Kanal eindringen kann.

Die Figur 5 zeigt beispielhaft noch eine weitere besondere Ausführungsform der Erfindung, bei der zwischen der Membran 3 mit den daran angrenzenden Schichten mit Katalysator (acl, ccl) und ohne Katalysator 5 und den beiden Elektroden 1, 2 jeweils eine separate Trägerschicht (backing layer) 6, beispielsweise aus porösem Kohlenstoffpapier oder -gewebe angeordnet ist.

## Patentansprüche

1. Direkt-Alkohol-Brennstoffzelle,
- umfassend eine Anode (1), eine Kathode (2) sowie eine zwischen der Anode und der Kathode angeordnete Membran (3), die auf ihren Oberflächen jeweils Bereiche mit einem Katalysator (acl, ccl) und ohne Katalysator (5) aufweist,
- mit wenigstens einem auf der Kathodenseite angeordneten Kanal (OC) zur Zuführung eines Oxidationsmittels, wobei der Bereich der Membran (ccl), der an diesen Kanal angrenzt, einen Katalysator für eine kathodische Sauerstoffreduktion aufweist,
- und mit wenigstens einem Kanal (FC) zur Zuführung einer alkoholhaltigen Flüssigkeit, ***dadurch gekennzeichnet,***
- **dass** wenigstens ein Kanal (FC) zur Zuführung einer alkoholhaltigen Flüssigkeit auf der Kathodenseite (2) oder der Anodenseite (1) angeordnet ist, und der Bereich der Membran, der an den Kanal (FC) für die Zuführung der alkoholhaltigen Flüssigkeit grenzt, keinen Katalysator für eine anodische Oxidation aufweist,
- **dass** wenigstens ein zusätzlicher Kanal (CrC) zur Abführung von gasförmigem CO₂ auf der Anodenseite (1) angeordnet ist und der Bereich der Membran (acl), der an diesen Kanal (CrC) angrenzt, einen Katalysator für eine anodische Oxidation aufweist.

2. Direkt-Alkohol-Brennstoffzelle nach Anspruch 1,
bei der wenigstens ein Kanal (FC) zur Zuführung einer alkoholhaltigen Flüssigkeit auf der Anodenseite (1) angeordnet ist.

3. Direkt-Alkohol-Brennstoffzelle nach Anspruch 1,
bei der wenigstens ein Kanal (FC) zur Zuführung einer alkoholhaltigen Flüssigkeit auf der Kathodenseite (2) angeordnet ist.

4. Direkt-Alkohol-Brennstoffzelle nach Anspruch 1,
**dadurch gekennzeichnet, dass** innerhalb der Membran (3) eine Trennvorrichtung (4) angeordnet ist, die sich von der Kathode (2) bis zu dem Bereich der Membran (3) erstreckt, die einen Katalysator für eine anodische Oxidation aufweist (acl) und an den Kanal (CrC) zur Abführung von CO₂ angrenzt, wobei die Trenneinheit (4) ein Permeieren von Alkohol von dem Kanal zur Zuführung einer alkoholhaltigen Flüssigkeit (FC) durch die Membran (3) zu dem Bereich mit dem Katalysator für eine kathodische Sauerstoffreduktion (ccl) verhindert.

5. Direkt-Alkohol-Brennstoffzelle nach Anspruch 1 bis 4, bei der zwischen wenigstens einer Elektrode (1, 2) und der Membran (3) wenigstens eine Trägerschicht aus porösem Kohlenstoffpapier oder -gewebe angeordnet ist.

6. Direkt-Alkohol-Brennstoffzellenstapel, umfassend wenigstens zwei Brennstoffzellen nach einem der Ansprüche 1 bis 5.

7. Verfahren zum Betreiben einer Direkt-Alkohol-Brennstoffzelle nach Anspruch 1 bis 5, mit den Schritten
- ein alkoholhaltiges anodisches Betriebsmittel wird entweder über wenigstens einen auf der Anodenseite (1) angeordneten Kanal (FC) oder über wenigstens einen auf der Kathodenseite (2) angeordneten Kanal (FC) an eine Stelle der Membran geleitet, an der diese keinen Katalysator für eine anodische Oxidation aufweist,
- das zugeführte alkoholhaltige anodische Betriebsmittel wird durch die Membran zu einer von der Zuführung beabstandeten Stelle der Membran auf der Anodenseite geleitet, an der diese einen Katalysator für eine anodische Oxidation aufweist,
- ein sauerstoffhaltiges, kathodisches Betriebsmittel wird über wenigstens einen auf der Kathodenseite angeordneten Kanal (OC) der Kathode zugeführt,
- das auf der Anodenseite bei der anodischen Oxidation gebildete gasförmige CO₂ wird über einen auf der Anodenseite (1) angeordneten, separaten Kanal (CrC) abgeführt.

8. Verfahren nach Anspruch 7, bei dem der Kanal zur Abführung von gasförmigem CO₂ (CrC) mit Wasser gefüllt ist oder gespült wird.

9. Verfahren nach einem der Ansprüche 7 bis 8, bei dem als alkoholhaltiger Brennstoff Methanol oder eine Methanol-Wassermischung eingesetzt wird.

10. Verfahren nach einem der Ansprüche 7 bis 8, bei dem als alkoholhaltiger Brennstoff Ethanol oder eine Ethanol-Wassermischung eingesetzt wird.

11. Verfahren nach einem der Ansprüche 7 bis 10, bei dem der Brennstoff über einen Kanal (FC) auf der Kathodenseite (2) zugeführt wird.

12. Verfahren nach einem der Ansprüche 7 bis 10, bei dem der Brennstoff über einen Kanal (FC) auf der Anodenseite (1) zugeführt wird.

## Claims

1. Direct alcohol fuel cell,
- comprising an anode (1), a cathode (2) and a membrane (3) arranged between the anode and the cathode, which has areas with a catalyst (acl, ccl) and without catalyst (5) on its surface,
- with at least one channel (OC) for supplying a means of oxidation arranged on the cathode side, in which the area of the membrane (ccl), which borders this channel, has a catalyst for cathodic oxygen reduction,
- and with at least one channel (FC) for supplying a liquid containing alcohol, ***characterised in that***
- at least one channel (FC) for supplying a liquid containing alcohol is arranged on the cathode side (2) or the anode side (1) and the area of the membrane, which borders the channel (FC) for supplying the liquid containing alcohol, has no catalyst for anodic oxidation,
- at least one additional channel (CrC) for removing gaseous CO₂ is arranged on the anode side (1) and the area of the membrane (acl), which borders this channel (CrC), has a catalyst for anodic oxidation.

2. Direct alcohol fuel cell according to claim 1,
in which at least one channel (FC) for supplying a liquid containing alcohol is arranged on the anode side (1).

3. Direct alcohol fuel cell according to claim 1,
in which at least one channel (FC) for supplying a liquid containing alcohol is arranged on the cathode side (2).

4. Direct alcohol fuel cell according to claim 1,
**characterised in that** a separating device (4) is arranged within the membrane (3), which extends from the cathode (2) as far as the area of the membrane (3), which has a catalyst for anodic oxidation (acl) and borders on the channel (CrC) for removing CO₂, in which the separating unit (4) prevents alcohol permeating from the channel for supplying a liquid containing alcohol (FC) through the membrane (3) to the area with the catalyst for cathodic oxygen reduction (ccl).

5. Direct alcohol fuel cell according to claim 1 to 4, in which at least one carrier layer made of porous carbon paper or tissue is arranged between at least one electrode (1, 2) and the membrane (3).

6. Direct alcohol fuel cell stack, comprising at least two fuel cells according to one of claims 1 to 5.

7. Method for operating a direct alcohol fuel cell according to claim 1 to 5, with the steps
- an anodic operating material containing alcohol is conducted either through at least one channel (FC) arranged on the anode side (1) or through at least one channel (FC) arranged on the cathode side (2) to a place on the membrane, where it has no catalyst for anodic oxidation,
- the anodic operating material containing alcohol supplied is conducted through the membrane to a place on the membrane at a distance from the supply on the anode side, where it has a catalyst for anodic oxidation,
- a cathodic operating material containing oxygen is supplied to the cathode through at least one channel (OC) arranged on the cathode side,
- the gaseous CO₂ formed on the anode side with anodic oxidation is removed through a separate channel (CrC) arranged on the anode side (1).

8. Method according to claim 7, in which the channel for removing gaseous CO₂ (CrC) is filled or flushed with water.

9. Method according to one of claims 7 to 8, in which methanol or a methanol-water mixture is used as fuel containing alcohol.

10. Method according to one of claims 7 to 8, in which ethanol or an ethanol-water mixture is used as fuel containing alcohol.

11. Method according to one of claims 7 to 10, in which the fuel is supplied to the cathode side (2) through a channel (FC).

12. Method according to one of claims 7 to 10, in which the fuel is supplied to the anode side (1) through a channel (FC).

## Revendications

1. Pile à combustible à alcool direct,
- comprenant une anode (1), une cathode (2) ainsi qu'une membrane (3) disposée entre l'anode et la cathode, qui présente sur ses surfaces respectivement des zones avec un catalyseur (acl, ccl) et sans catalyseur (5),
- avec au moins un canal (OC) disposé sur le côté cathode pour l'amenée d'un milieu d'oxydation, dans laquelle la zone de la membrane (ccl) adjacente à ce canal présente un catalyseur pour une réduction cathodique de l'oxygène,
- et avec au moins un canal (FC) pour l'amenée d'un liquide alcoolique,
**caractérisée en ce que**,
- au moins un canal (FC) pour l'amenée d'un liquide alcoolique est disposé sur le côté cathode (2) ou le côté anode (1), et la zone de la membrane adjacente au canal (FC) pour l'amenée du liquide alcoolique ne présente pas de catalyseur pour une oxydation anodique,
- au moins un canal supplémentaire (CrC) est disposé pour l'évacuation de CO₂ gazeux sur le côté anode (1) et la zone de la membrane (acl) adjacente à ce canal (CrC) présente un catalyseur pour une oxydation anodique.

2. Pile à combustible à alcool direct selon la revendication 1,
dans laquelle au moins un canal (FC) pour l'amenée d'un liquide alcoolique est disposé sur le côté anode (1).

3. Pile à combustible à alcool direct selon la revendication 1,
dans laquelle au moins un canal (FC) pour l'amenée d'un liquide alcoolique est disposé sur le côté cathode (2).

4. Pile à combustible à alcool direct selon la revendication 1,
**caractérisée en ce que**, à l'intérieur de la membrane (3), est disposé un dispositif de séparation (4) qui s'étend de la cathode (2) jusqu'à la zone de la membrane (3), qui présente un catalyseur pour une oxydation anodique (acl) et est adjacent au canal (CrC) pour l'évacuation de CO₂, dans laquelle l'unité de séparation (4) empêche que de l'alcool ne passe du canal d'amenée d'un liquide alcoolique (FC) à travers la membrane (3) jusqu'à la zone avec le catalyseur pour une réduction cathodique de l'oxygène (ccl).

5. Pile à combustible à alcool direct selon la revendication 1 à 4, dans laquelle au moins une couche de support en papier ou tissu carbone poreux est disposée entre au moins une électrode (1, 2) et la membrane (3).

6. Bloc de piles combustibles à alcool direct, comprenant au moins deux piles combustibles selon l'une des revendications 1 à 5.

7. Procédé de fonctionnement d'une pile à combustible à alcool direct selon les revendications 1 à 5, comprenant les étapes suivantes
- un matériel anodique alcoolique est amené, soit via au moins un canal (FC) disposé sur le côté anode (1), soit via au moins un canal (FC) disposé sur le côté cathode (2), au niveau d'un emplacement de la membrane où celle-ci ne présente pas de catalyseur pour une oxydation anodique,
- le matériel anodique alcoolique amené est conduit sur le côté anode à travers la membrane jusqu'à un emplacement de la membrane espacé de l'amenée, au niveau duquel celle-ci présente un catalyseur pour une oxydation anodique,
- un matériel cathodique oxygéné est amené à la cathode via au moins un canal (OC) disposé sur le côté cathode,
- le CO₂ gazeux formé lors de l'oxydation anodique sur le côté anode est évacué via un canal séparé (CrC) disposé sur le côté anode (1).

8. Procédé selon la revendication 7, dans lequel le canal d'évacuation de CO₂ gazeux (CrC) est rempli d'eau ou rincé.

9. Procédé selon l'une des revendications 7 à 8, dans lequel du méthanol ou un mélange eau-méthanol est utilisé comme combustible alcoolique.

10. Procédé selon l'une des revendications 7 à 8, dans lequel de l'éthanol ou un mélange eau-éthanol est utilisé comme combustible alcoolique.

11. Procédé selon l'une des revendications 7 à 10, dans lequel le combustible est amené via un canal (FC) sur le côté cathode (2).

12. Procédé selon l'une des revendications 7 à 10, dans lequel le combustible est amené via un canal (FC) sur le côté anode (1).
